**Europäisches Patentamt**

**European Patent Office**

**Office européen des brevets**

(19)

(11) Publication number : **0 477 122 A2**

# (12) EUROPEAN PATENT APPLICATION

(21) Application number : **91480124.6**

(22) Date of filing : **13.08.91**

(51) Int. Cl.$^5$ : **G09G 1/14, G06K 15/00**

(30) Priority : **17.09.90 US 583539**

(43) Date of publication of application :
**25.03.92 Bulletin 92/13**

(84) Designated Contracting States :
**DE FR GB**

(71) Applicant : **International Business Machines
Corporation
Old Orchard Road
Armonk, N.Y. 10504 (US)**

(72) Inventor : **Hofmeister, James Pierson
4651 N. Paseo Presidio
Tucson, Arizona 85715 (US)**
Inventor : **Stone, David Earl
1121 Princeton Drive
Longmont, Colorado 80503 (US)**
Inventor : **Yeskel, Filip Jay
1219 Redcoat Drive
Charolotte, North Carolina (US)**

(74) Representative : **Bonin, Jean-Jacques
Compagnie IBM France Département de
Propriété Intellectuelle
F-06610 La Gaude (FR)**

(54) Method of utilizing fixed font metrics in a device using relative font metrics.

(57)    Fixed font metrics are used in a relative metrics device by supplying a conversion value that maintains the display or print fidelity, i. e., the lines are the same length whether displayed from fixed or relative font data. The conversion factor is the product of the base measurement of the device and the font height base divided by the fixed font resolution.

EP 0 477 122 A2

FIG.2

Background and Summary of the Invention

This invention relates to the display of characters, especially on screens or printers, and particularly to display devices that are all-points-addressable and that generate the characters from font data.

Single fixed metric printers can print only characters, encoded as raster pels at a single resolution, that of the device it is displayed or printed on. The font metric values, expressed as a single fixed unit, must be specified in a measurement base equal to that of the device resolution.

For example, a printer or display device using fixed metric arithmetic and having an output resolution of 240 pels per inch employs a font resource including raster patterns representing each of the graphic characters that can be printed or displayed. Raster patterns designed for 240 pels per inch (94 pels per centimeter) resolution use font metric values that are specified in terms of 240 L-units/inch (logical units per inch).

The raster pattern for each character may also include the space on either side of the character for separating characters in a printed line. The font metrics include the number of pels occupied by each character and are used to compose the line to be printed or displayed. For example, the font metrics might indicate that the lower case "m" is 22 pels wide and the lower case "n" is 11 pels wide.

A data stream is supplied to the printer or display device and contains information that indicates the characters to be printed. The data stream typically also includes commands and information for locating the placement of the first character on the page or screen. For example, the initial character on a medium may be placed 1/2 inch (1.27 cm) from the top and 1 inch (2.54 cm) from the left edge of the page or display screen.

To print text on an all-points-addressable (APA) print-er using single fixed font metrics, the processor or driver first downloads the font resources (patterns and metrics) to the printer. The printer verifies that the font contains metric values having the same measurement base as the device, e.g., 240 pels per inch, so that no raster pattern density conversion is required.

Next, the processor or driver sends commands to define the printable area and to specify the location of the first character. The printer positions the cursor (or print head) at the indicated first character position. In the above example, the x-coordinate would be 120 pels (1/2 inch) and the y-coordinate would be 240 pels (1 inch). This is explained in more detail in US patent application serial number 424,848 (filed October 20, 1989).

Finally, the data stream is sent to the printer with the character to be printed identified by either single bytes or double bytes called code-points. The data stream may also contain control signals to change the cursor position, the font style, or other variables. This is explained in more detail in U.S. patent 4,651,278.

Newer, multiple fixed metric printers reject any font resource not containing raster patterns in a single, matching resolution but accept font metric values specified in more than one measurement base. For example, such a printer may accept values based on 240 L-units/inch (94 L-units/cm) as well as 1440 L-units/inch (567 L-units/cm). Such printers convert the values to another value relative to some internal measurement base used in the printer. A printer, for example, may use an internal measurement base of 14400 L-units/inch by converting the 240 L-units-/inch by multiplying by 60 and converting the 1440 L-units/inch values by multiplying by 10. In such devices, a controller in the printer or device can perform the arithmetic conversions instead of using processor resources for the task. The process is useful only for a limited number of measurement bases, i.e., bases that are aliquot parts of the printer resolution. For example, when one font is created with metrics at 240 L-units/inch and another with metrics at 300 L-units/inch (118 L-units/cm), the characters cannot be printed at 400 pels per inch (157 pels/cm) resolution without extensive conversion.

Relative metric outline printers use font metrics expressed in relative units. Characters are encoded as outlines by mathematical representations of lines and arcs defining the outline of characters' envelopes. The APA printers using outline fonts need only simple and inexpensive logic to scale relative font metric values, but complicated logic to convert outline fonts into raster patterns.

Relative metric, single fixed raster resolution printers would be useful for using existing raster font patterns while able to print interchangeably with outline font printers without loss of print fidelity. Such a printer would be able to position the text characters of either relative or fixed value fonts to a fidelity within one pel per line. If the same outlines were used to generate the font raster patterns and if the printer had the same resolution as a relative metric outline printer, then the printed output from both printers would be identical with the exception of media registration differences.

The above approach would be viable provided that the data to be printed was prepared using font resources containing the same font metric values as that used by the printer and provided that there was no requirement to print, on the new printer, data prepared for an old printer.

Unfortunately, converting fixed metric to relative metric values results in a loss of print fidelity due to accumulated rounding errors across a print line. The conversion from relative to fixed metric values is prone to the same problem. Therefore, the ability to print a data stream prepared with values based on 240 pels per inch resolution on a single fixed metric, fixed 240 pels per inch resolution printer and also on a relative metric, fixed resolution (of any value) printer using pregenerated font raster patterns for the fixed resolution is difficult if print fidelity is to be preserved.

Font resources include units of measurements, metrics, and shape data. For relative resources, the units of measurements are the unit base expressed in some relative value and units per unit base such as 1000. For fixed resources, the units of measurement include a base value in inches, for example, and units per unit base. An example of fixed units of measurements is a unit base of 10 inches (25.4 cm) and 14,400 units per unit base.

The metrics are the font values for each displayable or printable character giving the space needed for the associated character. One metric is the character increment that denotes the total space occupied by the character. Another font metric is the A-space allocated to the character and is the distance from the location where the character is deemed to begin and the start of the pel pattern that makes up the character. In both fixed and relative metrics, the metrics are expressed in logical units (L-units). Fixed metrics are usually L-units/inch and relative metrics are usually L-units/em. (An em is a printer's unit of measure exactly as wide and as high as the point size of type being set, so called because an M was originally cast in a square body; an en is half as wide as an em.)

The shape data of the font resources are the pel patterns that make up the individual characters. For fixed font data, the pels are mapped into a character box. Relative fonts may be given as outlines of the characters expressed mathematically. Being mathematical expressions, the outline fonts can be easily scaled by multiplication with a scaling factor. One of the ways of printing outline font characters is to convert the scaled outlines to pel patterns. Pel patterns are constructed according to some pel resolution, commonly 240 pels per inch and 300 pels per inch. (A resolution of 240 pels per inch means that the pels, or picture elements or dots, making up the pattern are spaced 1/240 of an inch apart.) A font resource for relative fonts includes a scaling factor or multiplier.

Printers, for example, have been typically fixed font devices and considerable time and expense is involved in producing the font patterns in different typeface designs. Newer printers are made to use relative fonts because of the greater versatility of font sizes available. Only one size of font outlines need be stored, all the other font sizes being derivable using a scaling factor. Fixed font patterns for each font size must be stored as well for each style such as italic, Roman, sans-serif, and so on. The outline fonts can be mathematically manipulated to produce italics, for example.

It is desirable, however, to be able to use the fixed fonts that have already been produced in the newer relative font printers. It makes the printers upward compatible so that new fonts are not required and the newer printers can be used in existing systems without extensive modifications.

In order to use the old fixed fonts on a relative printer, it is necessary to make some conversions. The obvious conversions create a problem of print fidelity. Print fidelity is here used to mean that a line of printed characters should be the same length on the relative printer whether the font resources are relative or fixed. Unevenness of the right margins of printed lines is noticeable even to the casual observer and creates undesired effects. Some readers become disturbed by the varying line lengths.

The invention is directed to using fixed font metrics in a relative device so as to preserve print fidelity by supplying a suitable conversion factor.

U.S. Patent 4,675,830 discloses the use of outline fonts for scaling typeface (font) data. The characters are stored as contours expressed mathematically. The contour expressions are linearly scaled to produce the desired size of characters.

According to the invention, a device designed for displaying characters expressed in relative font metrics capo display characters specified in fixed font metrics by supplying font metric data for each character encoded n relative units with a specified base value. The fixed metric data has been transformed by the host or driver or the printer itself to the relative units. A multiplier, calculated by the host processor or driver or the printer to be the exact value necessary to make the absolute metric calculation in the printer produce the same absolute value as the original fixed metric values.

The printer uses the multiplier to make the calculation previously described even though the multiplier no longer represents the character height but is a value to derive an absolute metric value in $1/1,440,000$ inch ($17 \times 10^{-7}$ cm) . The multiplier's value is such that there is not a remainder after the calculations are completed.

Brief Description of the Drawing

The invention is described in detail by referring to the various figures which illustrate specific embodiments of the invention, and wherein like numerals refer to like elements.

FIG. 1 is an illustration of two raster characters showing the values used in font metrics.

FIG. 2 is a flowchart showing the sequence of operations performed by a controller for printers using either fixed metrics or relative metrics.

FIG. 3 is a flowchart showing the sequence of operations performed in a control unit in a printer capable of accepting fixed or relative metrics.

## Description of the Preferred Embodiment

In the following description, the device under consideration is called a printer but the invention is equally applicable to display devices other than printers such as CRT displays.

Certain operations are common to all programs such as those referred to as housekeeping. This includes operations like establishing constants, reserving memory space for variables, and supplying names to subroutines.

Subroutines are computer program modules that are not placed directly in the stream of instructions in which they are used. Subroutines are invoked by call and link procedures which cause the program execution to transfer to the list of computer instructions comprising the subroutine program and to link or to supply the operands used by the subroutine. When a subroutine has completed execution, the program control returns to the instruction in the calling program following that which called the subroutine.

In the following description, references are made to the flowcharts depicting the sequence of operations performed by the program. The symbols used therein are standard flow-chart symbols accepted by the American National Standards Institute and the International Standards Organization. In the explanation, an operation may be described as being performed by a particular block in the flowchart. This is to be interpreted as meaning that the operations referred to are performed by programming and executing a sequence of instructions that produces the result said to be performed by the described block. The actual instructions used depend on the particular hardware used to implement the invention. Different processors have different instruction sets but the person of ordinary skill in the art is familiar with the instruction set with which he works and can implement the operations set forth in the blocks of the flowchart.

Pels, sometimes called pixels, are picture elements, usually dots, that make up a page of text or images or combinations thereof. In black and white printing, a pel having a value of 0 usually represents a white dot, i.e., absence of ink, and a pel having a value of 1 represents a black dot, i.e., a drop or dot of ink applied. Pel resolution refers to the number of dots per linear unit of square area, i. e., 240 pels means a square inch (6. 45 cm$^2$) divided into 240 rows of 240 pels each for a total of 57,600 individual pels per square inch (8930 pels/cm$^2$).

To print text on an APA printer or display device using fixed font metrics, the host processor or display driver transmits to the printer font metric information for each character to be printed expressed in fixed physical units, font shape information encoded as raster patterns having the same physical resolution as the APA device, code points denoting the characters to be printed, and information for controlling the positioning and modifications to text.

When the printer receives the above data, the printer or display device stores the data and then uses the code point as an index into the font shape raster data, which is retrieved and overlaid on the output medium. Character positions are determined by the position of the preceding character offset by the character increment of the previous character, the character increment being taken from the font metrics data.

As an example of the calculations and font metrics handling just described, the code point is assumed to be hexadecimal '4B', denoting the period at the end of this sentence. The font shape information for the period character is a raster pattern of four clustered pels on 1/240 inch centers. The character increment of the period including the separation, or "white", space is taken from the font metric data to determine the location of the next character.

To print text on an APA printer or display device using relative font metrics, the host processor or display driver sends to the printer the font metric data for each character encoded in relative units with a specified base value, font shape information encoded as raster patterns having the same physical resolution as the APA device, code points denoting the characters to be printed, and information for controlling the positioning of characters and modifications to text.

The printer, on receiving the above data, operates essentially as described above for the fixed font metrics printer.

For the example above, the hexadecimal '4B' code point is used as an index to retrieve the font shape information for the period, perhaps six clustered pels on 1/300 inch centers. The printer is assumed to use a measurement base (absolute metric value) of 1/1,440,000 inch. The metric value of the character increment in 1,440,000 is divided by 300 (pels per inch resolution of the font data) to determine an integral number of pels result for the printed character. Any fractional part is retained for use in the calculation for the next character.

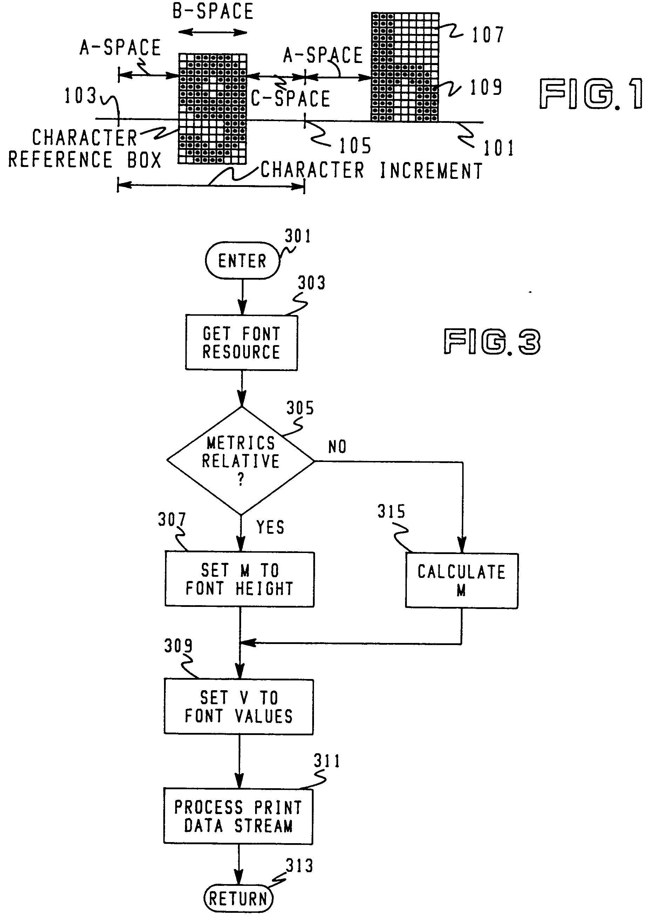

Examples of bit maps (raster patterns) and font metrics are shown in Figure 1 for the lower case characters "g" and "h". The characters are arranged along a baseline 101. A point 103 on the baseline represents the starting point for the character "g". The character boxes are located between an A-space and a C-space which are sometimes called white space. The latter form the necessary separation between adjacent characters.

The A-space,B-space, and C-space measurements are part of the overall metric making up the character increment. The latter is designated in L-units per inch or some other units depending on the font system used. It is added to the coordinates of the starting point 103 to obtain the starting point 105 for the "h" character.

A baseline offset value is supplied to drop the "g" character so that the latter's descender is below the baseline. The baseline descender offset of the "h" character is zero.

Once located, the characters are printed by overlaying the pel pattern on the medium, e.g., the paper page being printed. Dark pels 109 define the character and white pels 107 are not inked or darkened.

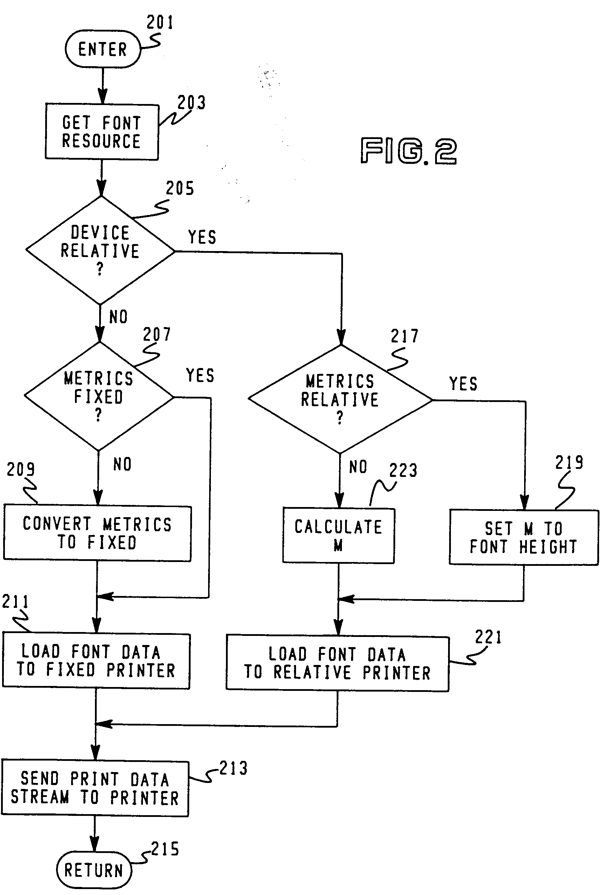

The flowchart of Figure 2 illustrates the steps involved in the conversion process when fixed resources are used with a relative font device according to the invention. The procedure shown in Figure 2 to be described is based on the conversions being done in a controller or driver. The process starts when the subroutine of the flowcharts is entered at a terminal block 201.

The font resources are accessed as shown by a process block 203. At this point, the controller or driver has not determined whether the font resources are fixed or relative.

A decision block 205 determines whether the device is relative or fixed. If the device is fixed, then a decision block 207 determines whether the font metrics of the font resources are fixed so as to match the device. If not, then the font resources are converted to fixed by any one of several processes well known in the art in a process block 209.

The next step loads the font data into the device or printer by a process block 211. Next, in a process block 213, the data stream is sent to the device. The last step of interest is a return to the calling program via a terminal block 215.

At the decision block 205, if the device is relative, i.e., uses relative font metrics, a determination is made at a decision block 217 whether the font metrics are relative. If so, a value of M is set to the font height by a process block 219 and the font data is loaded by a process block 221.

If, at the decision block 217, it is determined that the font data is not relative, i.e., fixed, then the value of M is calculated in a process block 223 before the relative font data is loaded into the device by the process block 221.

The process block 223 determines the value of M that is required to use for transforming the fixed font metrics so that print fidelity is maintained.

Figure 3 illustrates the procedure that incorporates the invention if the conversion is made in a relative device. The routine is entered at a terminal block 301 and the font resources are obtained in a process block 303. Among the values obtained are the base value (B), the font height base (BFH), and the resolution or font measurement base.

The type of font resources are determined in a decision block 305. If the font metrics are relative, then M is set to the font height in a process block 307. The font values, V, are obtained from the font resources and represent the font metrics. For the character increment metric, multiplying V by M for each character determines the location of successive characters as described above.

If the fonts are not determined to be relative in the decision block 305, then the scaling value, M, is determined in a process block 315. The rest of the procedure continues as previously described.

The value of M is determined by

$$M = B \times BFH/R$$

where

B = base measurement value,

BFH = font height base, and

R = resolution of the fixed font.

For example, if the base measurement of the device is 1000, the font height base is 720, and the font resolution is 240, then

$$M = 1000 \times 720/240 = 3000. \quad (1)$$

This value of M is used by the printer in the same way that the M is used when representing the font height using relative font values.

As an example of the use of the multiplier derived in (1), consider the display or printing of the lower case letters 'm' and 'n'. The x-and y-coordinates of the first character are found by

$$x = 1000 \times 720 \times 1 = 720,000 \text{ L-units and}$$
$$y = 1000 \times 720 \times .5 = 360,000 \text{ L-units.}$$

The lower case 'm' is located according to the coordinates above and generated from the pel map for the character. The character increment for the letter 'm' is V = 22 (pels width) and

$$M \times V = 3000 \times 22 = 66000.$$

Therefore, the next character, 'n', is located at an x-coordinate given by

$$x = 720,000 + 66,000 = 786,000.$$

That is, the location of 'm' plus the character increment of 'm' in L-units derived from the pel value of 22 by multiplying by the conversion factor, M.

The character following the letter 'n' is located at

$$x = 786,000 + (3000 \times 11) = 819,000 \text{ L-units}$$

where the character increment of 'n' is 11 pels.

For a line of 100 'm' characters, the line length would be

$$100 \times 22 \times 3000/720000 \text{ or } 9.1666 \ldots \text{ inches}$$
$$(23.3 \text{ cm}).$$

On a single fixed metric printer, for the same line of 100 'm' characters, the line length would be

$$100 \text{ v } 22/240 \text{ which is exactly the same}$$
$$9.1666 \ldots \text{ inches.}$$

Therefore, the display or print results using fixed font resources on a relative font metric device has achieved the same results as if the font resources had been relative.

While the invention has been particularly shown and described with reference to a preferred embodiment thereof, it will be understood by those skilled in the art that various changes and modifications in form and details may be made therein without departing from the spirit and scope of the invention according to the following claims.

## Claims

1. A method of utilizing fixed font metrics in a device using relative font metrics comprising the steps of:

   supplying fixed font metrics having a predetermined resolution;

   deriving a conversion factor to maintain print fidelity; and

   converting font metrics from said fixed font metrics to relative font metrics.

2. The method claimed in claim 1 wherein said converting step includes the step of multiplying the font metrics in fixed metric form by the conversion factor.

3. The method claimed in claim 2 including in said deriving step the following steps:

   multiplying the base measurement of the device times the base font height of the device; and

   dividing by the predetermined resolution of the fixed font resource.

B-SPACE

A-SPACE

CHARACTER
REFERENCE BOX

103

A-SPACE

C-SPACE

107

109

101

105

FIG.1

CHARACTER INCREMENT

ENTER  301

GET FONT
RESOURCE  303

FIG.3

METRICS
RELATIVE
?  305

NO

YES

SET M TO
FONT HEIGHT  307

CALCULATE
M  315

SET V TO
FONT VALUES  309

PROCESS PRINT
DATA STREAM  311

RETURN  313

FIG.2